# EUROPEAN PATENT SPECIFICATION

(11) **EP 0 352 047 B1**
(45) Date of publication and mention of the grant of the patent: **15.02.1995**
(21) Application number: 89307224.9
(22) Date of filing: 17.07.1989
(51) Int. Cl.: B65G 17/12

(54) **Method and apparatus for conveying materials**
Verfahren und Vorrichtung zum Transport von Materialien
Méthode et appareil pour le convoyage de matériaux

(30) Priority: 19.07.1988 US 222337
(43) Date of publication of application: 24.01.1990
(73) Proprietor: REFAC INTERNATIONAL, LIMITED, West Palm Beach Florida 33401 (US)
(72) Inventor: Gough, George Terah 17 The Beeches, Staffordshire ST5 8RX (GB)
(74) Representative: Carpmael, John William Maurice

(56) References cited:
- EP-A- 0 020 148
- EP-A- 0 198 393
- EP-A- 0 212 858
- PATENT ABSTRACTS OF JAPAN vol. 8, no. 143 (M-306)(1580) 04 July 1984,& JP-A-59 39605 (SUMITOMO) 05 March 1984,

## Description

This invention relates to a conveyor or elevator system of the type that comprises a series of buckets supported by a driven chain or cables to move the buckets along a predetermined path, and to a related method. It is desirable in such systems to have the buckets arranged close together and very often the buckets are interlocked or overlapped. It is also desirable to enable the buckets to be maintained in a substantially horizontal attitude at all times.

When the buckets negotiate vertical turns, internally or externally, if the buckets are interlocked or overlapped or even if they are very close together, there is a tendency for the buckets to interfere with each other so that some of the buckets tip and dislodge their load. This problem can be solved by moving the buckets further apart. However, this creates other problems. The carrying capacity of a conveyor is a function of bucket size, rate of travel, and the number of buckets per unit of distance on the conveyor. Increasing the spacing between the buckets substantially reduces the carrying capacity of the conveyor system. In addition, at certain points on the conveyor, for example at the filling position, a touching or overlapping relation between adjacent buckets is desirable to prevent product from falling through spaces between the buckets. For all of these reasons, it is desirable for the buckets to be close together or overlapping. However, this has not been possible in prior art devices since this causes interference between buckets on curves, particularly on internal curves.

This invention seeks to overcome these prior art problems and allows the buckets to be very close and even overlapping on straight sections of the conveyor, but to move the buckets apart on curves.

Therefore, it is an object of the invention to provide an elevator or conveyor system in which this prior art difficulty is overcome and in which the buckets may be arranged to assume a horizontal attitude at all times.

In EP-A-0212858, there is disclosed an elevator or conveyor system comprising a series of buckets supported by a driven chain or cable along a predetermined path, the buckets being supported on the chain or cable by means of individual pivoting arms, each pivoting arm being attached to the chain or cable at one end in fixed orientation to the chain or cable, and being pivotally connected to a bucket at its opposite end. At bends in the predetermined path, guide tracks are provided which cause the buckets to move apart horizontally at the entry to the bend, and swing away from the path followed by the chain or cable, and follow a curve of greater radius during their passage round the bend, whilst still remaining horizontal. However, with this construction, there is a real risk of two adjacent buckets, the edges of which are overlapped for filling in a horizontal section of the conveyor system, catching with each other as they are moved apart horizontally, and causing one or both buckets to swing and discharge their contents, as the buckets start to move away from the path followed by the chain.

In accordance with this invention, guidance means are provided in the path upstream of a bend to cause the buckets to move apart vertically and then allow the arms to swing outwardly away from the chain or cable so that the buckets move outwardly and follow a curve of greater radius than the radius of the curve or bend in the path. The buckets are thereby separated and then spaced further apart when going around a curve or bend than when they are proceeding along a straight section of the path.

Preferably, the buckets are arranged to be very close together or touching or overlapping or even interlocked along the straight horizontal sections of the path but to separate when the buckets go around a curve or bend and the buckets are maintained in a substantially horizontal attitude at all times.

Preferably, each arm is provided with a roller which runs on a track which runs parallel to the path of the chain or cable along the horizontal straight sections to help to support the buckets. This will swing away from the chain or cable at curved sections with the arm.

If a chain is employed it may have rollers or wheels at intervals along its length to engage a track to guide the chain.

Means may be provided to empty the buckets comprising a cam located alongside the path of the chain or cable and a corresponding cam follower on each bucket to cause the bucket to tip and empty when the cam follower engages the cam.

The guidance means may be a cam track or guide, such as a nylon block, one face of which has two surface portions inclined at about 7½° to each other, over which the chain runs, or it may be a roller around or over which the chain passes.

Preferably, each of the pivoting arms is connected to a bucket by means of a bucket pin and the pins carry the rollers. The rollers which are employed for chain guidance may be carried on a pin or shaft which performs the additional function of acting as a means for connecting the pivoting arm to its link and pivotally connecting it to the rest of the chain. The shaft may pass through a pair of links and form the means of hinging the links of the chain together. Preferably, each pivoting arm is connected to a chain link by two pins, which join that link to the adjacent links.

The invention is preferably applied to a bucket elevator of the self-contained type which is provided with a loading station and an unloading station and a driven chain, and having a vertical or inclined section so as to raise the buckets from the loading station to the unloading station.

The invention is now described by way of example with reference to the accompanying drawings, in which:-
FIGURE 1 is an end elevation of an elevator bucket for use with an elevator or conveyor system in accordance with the invention;
FIGURE 2 is a fragmentary plan view of the bucket shown in Figure 1;
FIGURE 3 is a horizontal section through a portion of a chain of a bucket elevator and shows the way in which each bucket is pivoted to the chain by a pivoting arm;
FIGURE 4 is a vertical section through the chain showing how a bucket is supported from a standard roller type chain;
FIGURE 5 is an end elevation of a bucket elevator showing the buckets supported from a standard roller type chain that has a modified pivoting arm and additional chain guide wheels to enable single chain suspension;
FIGURE 6 is a plan view of the bucket elevator shown in Figure 5;
FIGURE 7 is a schematic side elevation of bucket elevator showing the buckets supported from the chain;
FIGURE 8 is an enlarged, fragmentary view of the bucket discharge ramp shown in Figure 7;
FIGURE 9 shows a means of discharging the bucket alternate to that shown in Figures 7 and 8;
FIGURE 10 shows a means of discharging the bucket alternate to Figures 8 and 9;
FIGURE 11 shows a schematic side elevation of part of a bucket elevator showing a control or bucket levelling device, and one construction of guidance means;
FIGURE 12 is the end elevation of Figure 11;
FIGURE 13 shows the details of the control and levelling device in Figures 11 and 12;
FIGURE 14 shows to an enlarged scale the chain path and the bucket pin path and an alternative construction of guidance means which is a feature of bucket control when negotiating an internal turn;
FIGURE 15 illustrates a run of the conveyor showing the chain guide tracks, and
FIGURE 16 illustrates a run of the conveyor showing the chain rollers running in vertical guide tracks.

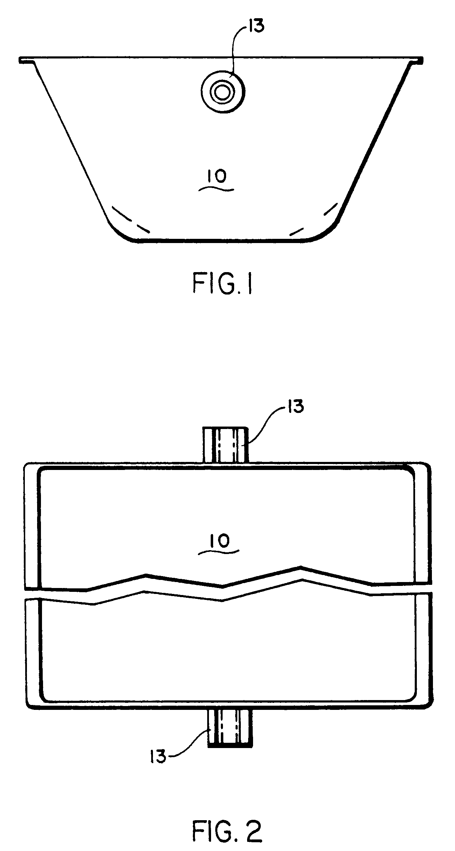

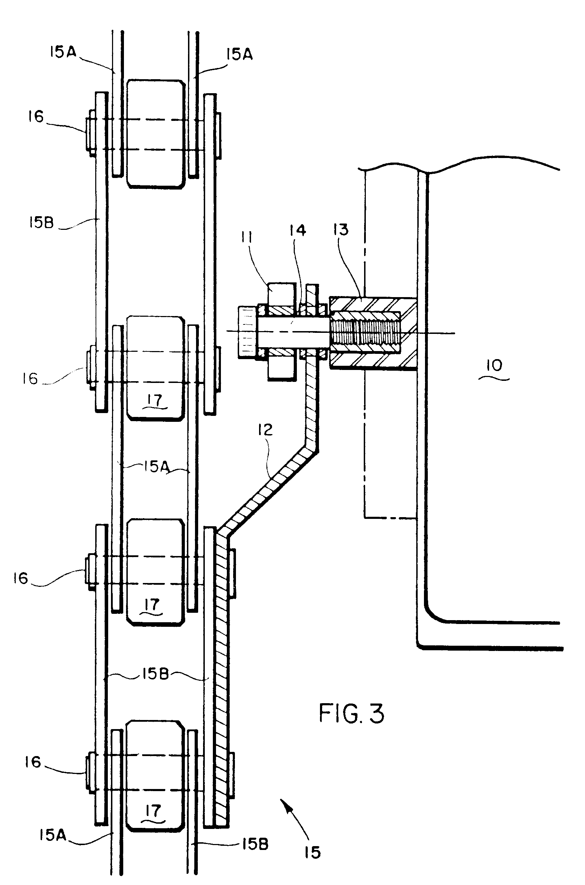

Referring to the drawings, in Figures 1, 2 and 3, each bucket 10 of the bucket elevator carries a trunnion 13 and is pivoted by a bucket pin 14 to a pivoting arm 12. As is shown in Figure 3, the bucket pins 14 each carry a roller 11 for contact with bucket support means, as will be described later.

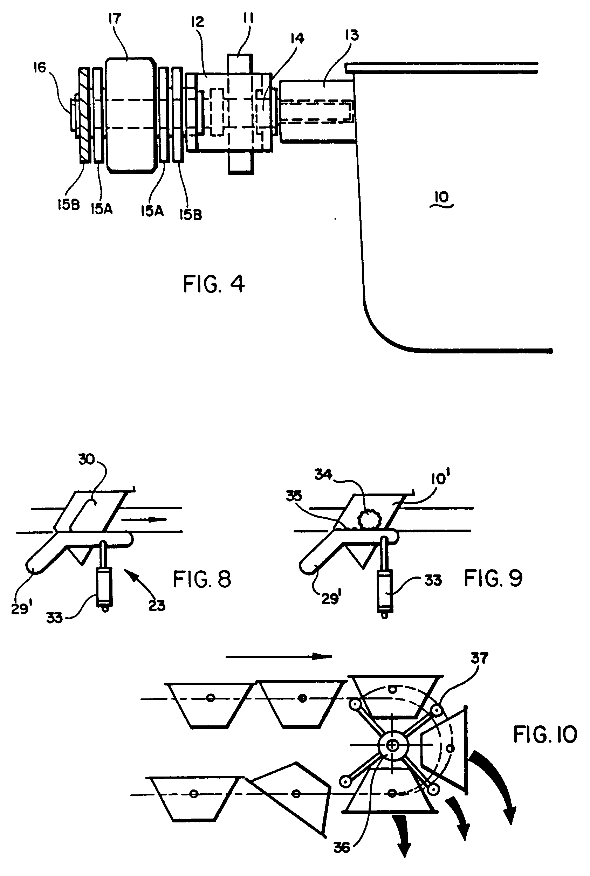

A driven chain 15 is constructed of pairs of chain links 15A, 15B with a shaft 16 passing through the junction of the pairs. The pivoting arm 12 is connected to one end of each of a pair of adjacent shafts 16 for a particular link 15B. Each pair of chain links 15A, 15B carries a pair of spaced-apart chain rollers 17 by means of the two shafts 16. In this manner, the pivoting arm 12 is positioned in a fixed orientation with relation to its particular link of the chain 15. This assembly of links 15A, 15B, shaft 16 and pivoting link 12 is repeated consistent with the bucket pitch in the chain 15 so as to support the buckets 10, as illustrated in Figures 3, 4, 5 and 6. Normally, a chain such as shown in Figures 3 and 4 would be provided on each side of the buckets.

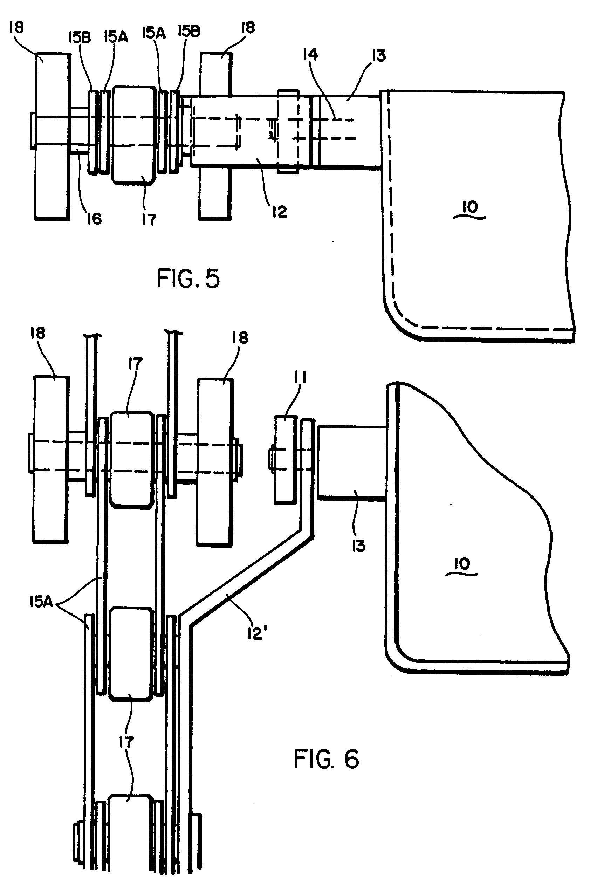

As is shown in Figures 5 and 6, an alternative system is shown wherein bucket 10 is supported at one end only by a pivoting arm 12′ on a single chain 15A, 15B. This chain has outriding chain guide rollers 18 which permit the use of the single chain 15, and the rollers 18 run in a track which stops the chain twisting. The bucket 10 is thus supported on the chain 15 at two spaced-apart points in cantilevered fashion.

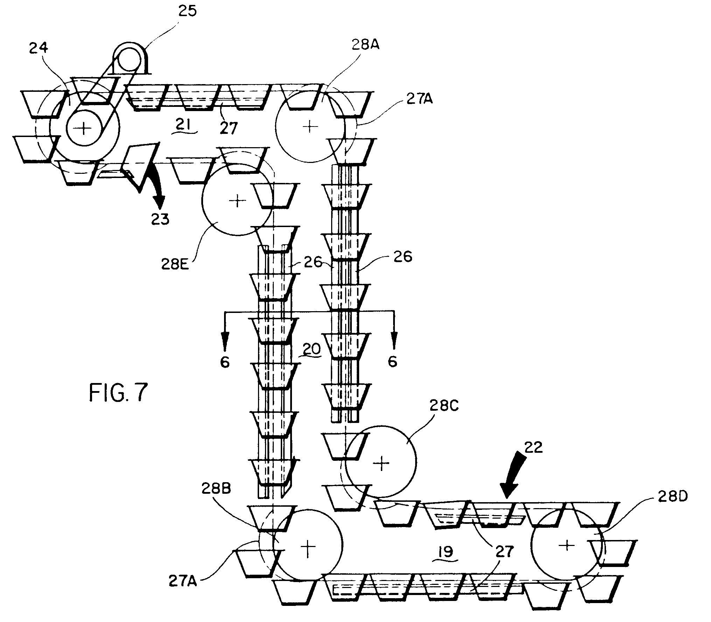

Referring now to Figure 7, the bucket elevator system comprises a horizontal section 19, a vertical section 20 and an upper horizontal section 21. The material is loaded into the buckets 10 at a loading station 22 and discharged at a discharge section 23.

The chain 15 is preferably driven by a drive sprocket 24 in turn driven by an electric motor 25. The conveyor is supported at other points along its length where turns are made by driven sprockets 28A, 28B, 28C, 28D and 28E.

The terms "internal curve" and "external curve" are used in the application to define the relationship between the chain and the sprockets of the conveyor. As used in this application, including the claims, the term "internal curve" refers to a curve defined by the chain passing over the surface of a sprocket where the sprocket is positioned outside the circuit of the chain. Sprocket 28C in Figure 7 identifies such an internal curve.

The term "external curve" refers to a curve defined by the chain passing over the surface of a sprocket where the sprocket is positioned inside the circuit of the chain. Sprocket 28D in Figure 7 identifies such an external curve.

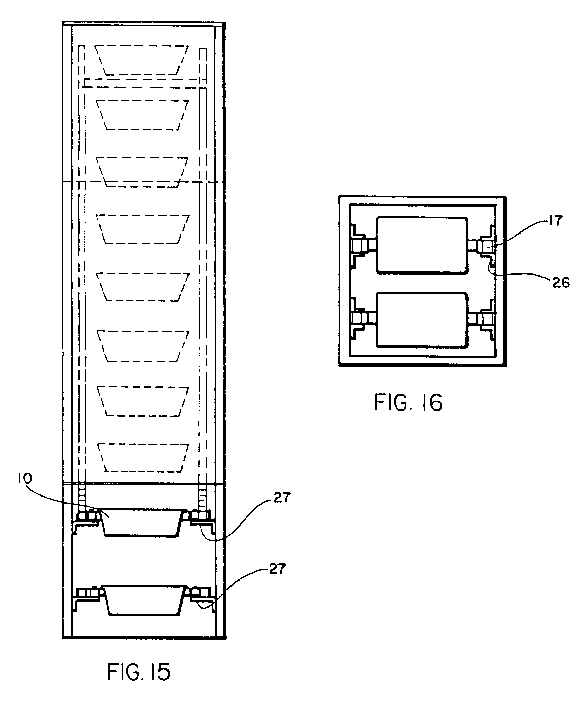

In the vertical section 20, the chain rollers 17 run in tracks 26 and in the horizontal sections 19 and 21, the rollers 11 run on a support track 27 (see Figures 15 and 16) so as to support the buckets. At curved parts of the conveyor path, the bucket pivot point, i.e. the pins 13, diverges away from track 27 (see for example section 27A of track 27 in Figure 7), as will hereinafter be explained.

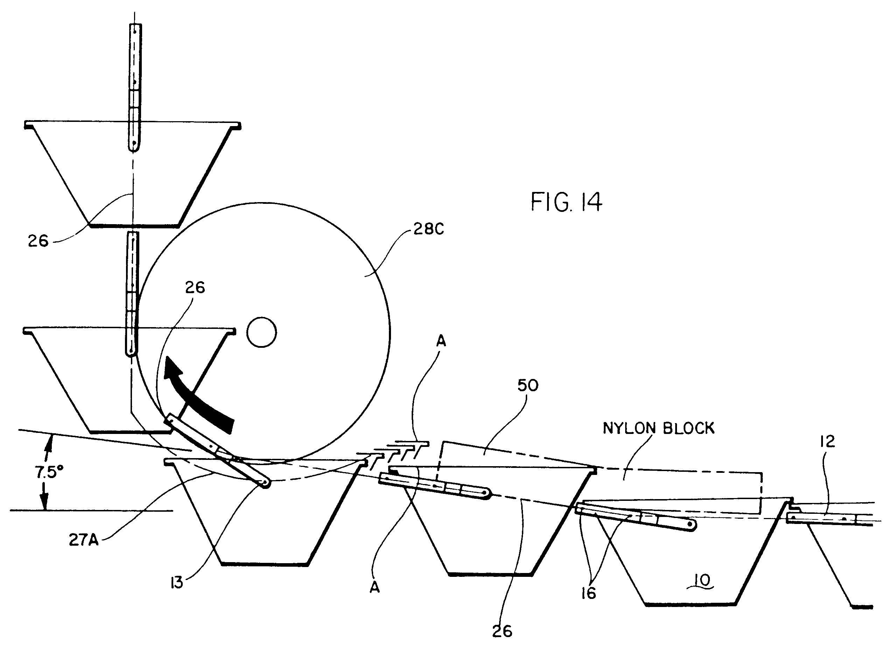

When the buckets 10 are proceeding along a straight portion such as horizontal section 19 or vertical section 20, the pivoting arms 12 will remain parallel with the tracks 26 and 27. This is best shown in Figure 14. However, when the buckets are carried by the chain(s) around a sprocket, the ends of the arm(s) 12 supporting the buckets will be caused to follow a diverging path, such as path 27A and arms 12 will swing so that the buckets 10 move away from the tracks in an outward direction. This is because the two pins 16 and the chain link supporting the bucket will start to move around the sprocket. As can be seen in Figures 7 and 14, the paths followed by the bucket pins are shown at 27A, and these paths are of greater radius than the radius of the respective sprocket around which the chains run. Thus the buckets 10 are caused to follow a curve of greater radius than that followed by the chain, and therefore separate from each other during their passage around the bend. The buckets 10 can thus proceed around the bend while maintaining their horizontal attitude without interfering with each other.

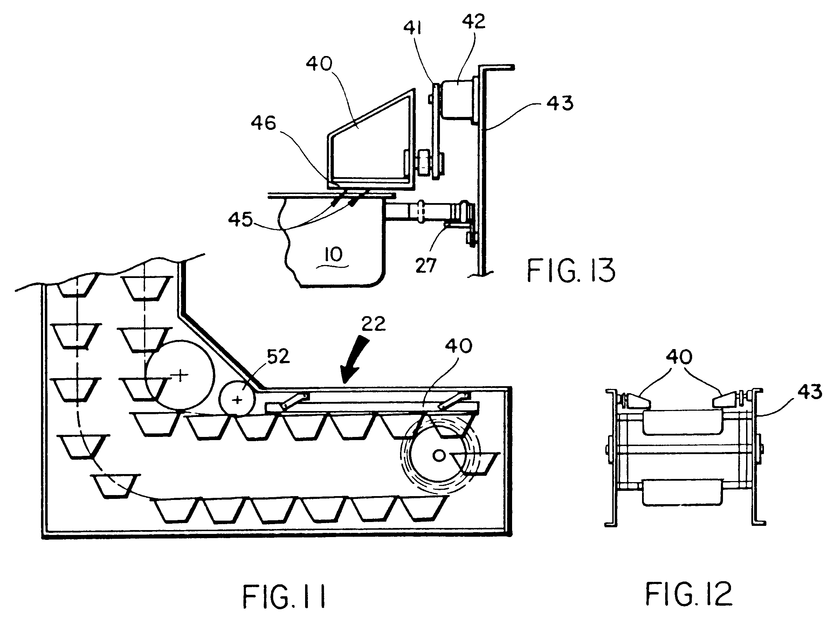

As will be apparent by reference to Figures 7 and 14, before the bucket pins 13 can swing out and follow the enlarged radius curves such as curves 27A, i.e. an unnatural path, the buckets must be moved apart, otherwise the trailing edge of one bucket would hit the leading edge of the following bucket, i.e. there would be a collision of bucket edge A as shown in Figure 14, causing the contents of the buckets to be spilled. This moving apart of the buckets can be achieved either as shown in Figure 14, or as shown in Figure 11 (or in other ways).

Referring to Figure 14, a guidance means or cam track is provided, in the form of a nylon block 50, with the underside of which the chain rollers 17 engage. The block has the effect of causing the chain to approach its sprocket at a few degrees from the horizontal, 7.5° being shown.

It will be seen that unless an approach angle of approximately 7$\frac{\text{1}}{\text{2}}$° is maintained at a precise point prior to the turn, then the unnatural path which the bucket pin 13 wishes to take will cause the buckets to move downward causing the bucket lips to interfere with each other and dislodge their load. The guidance means ensure this approach angle and creates a gap at point "A" on Figure 14. This gap will then provide for the correct bucket lip clearance, and allow the bucket arm(s) 12 to angle relative to the rest of the chain, causing the bucket pin or trunnion to take its unnatural path and provide clearance for the buckets 10 to pass each other and negotiate around the bend without collision. This is of course achieved because of the fixed orientation of the pivoting arm(s) 12 in relation to the portion of the chain by virtue of the arm's attachment by means of the two shafts 16 to the chain, as is best shown in Figures 3 and 6. Bucket separation is achieved at each of the curves in the same way. The particular shape of the diverging paths will depend upon the curvature of the bend and other factors.

Instead of using a cam track, e.g. a nylon block 50 to achieve bucket separation, this can be achieved by guiding the chain around an extra roller (or set of rollers) such as the roller 52 shown in Figure 11.

Referring now to Figure 8, at the discharge station 23, a cam 30 located on the outside of each bucket 10 contacts a discharge ramp 29 causing the bucket 10 to tip and discharge. Each cam 30 is so positioned and arranged on the outer side of bucket 10 as to cause the bucket 10 to pivot through approximately 100° of arc and dislodge its load. The ramps or tipping positions can be at one or several different positions and can be remotely controlled through an air cylinder 33 or hydraulic rams or solenoids or actuators of various types.

As is shown in Figure 9, a bucket 10′ can alternatively be provided with a stationary sprocket 34 affixed to one side instead of a cam 30. As bucket 10′ moves through the discharge section 23, sprocket 34 engages a rack 35, causing the bucket 10′ to tip forward and discharge its contents.

Another method of tipping the buckets 10 is shown in Figure 12 where a continuous single dumping or discharge is required comprising a paddle or spider type assembly 36 that has four extended rollers 37 evenly pitched to match the bucket pitches and which are extended to accommodate the unnatural radius path of the bucket 10 as it is held and maintained while being guided through a 180° turn, at which time the bucket contents are discharged. The assembly 36 is attached to the terminal shaft that supports the chain sprockets.

Filling can take place at any horizontal position as the buckets are always in close proximity to each other or overlapped on all horizontal runs.

Because the buckets 10 are always substantially horizontal, except when being emptied, any material that remains in the bucket after it has been emptied will not fall out during the return of the buckets to the filling position as happens in known elevators where the buckets very often return in an inverted position to the filling station.

Figure 13 shows a partial section through a bucket elevator at a point where the material is loaded. Where the material is being loaded into the buckets, it is advantageous correctly to guide the material to be transported into the bucket with the least possible amount of spillage or loss, therefore floating or movable guides 40 are provided which are pivoted on arms 41 that are mounted on resilient mounts 42. These resilient mounts are then attached to the main body of the elevator/conveyor 43 which in turn supports the conveyor chain on tracks 27 throughout the horizontal section 19.

The effect of the spring loaded guides 40 maintains the stability of the buckets through the loading station 22 and carefully directs the material to be moved into the centre section of the bucket, thus also helping to control dusting of the material to be carried by offering a seal along the moving edge of the bucket lips 45. The bottom section of the guide 40 is fitted with a nylon or other low friction material 46 to present low friction face to the bucket edges as they pass beneath.

The chain 15 shown in Figures 3, 4, 5 and 6 may be a standard 3" pitch hollow bearing pin type chain made in carbon steel, special plastic, stainless steel or treated carbon steel. The rollers 17, which are of greater diameter than the chain arm depth, can be in carbon steel, stainless steel, nylon or other materials which will assist in lubrication and maintenance.

A single chain can be used or a twin chain unit may be used.

Although as shown applied to a bucket elevator, the principles of this invention may equally well be applied to any conveyor system where closed pitch buckets or other conveyor devices have to pass around bends, both internally and externally.

It will of course be understood that the present invention has been described above purely by way of example, and modifications of detail can be made within the scope of the invention.

## Claims

1. A conveyor system comprising:
(a) a series of buckets (10) supported by an entrainment means (15A,15B) defining a predetermined endless path having straight portions (19,20,21) and at least two internal curves (28C); and
(b) an individual elongate pivoting arm (12) supporting each respective bucket (10) on the entrainment means (15A,15B), each said pivoting arm (12) being attached to the entrainment means (15A,15B) at a first end thereof in fixed orientation to said entrainment means (15A,15B), and pivotally supporting the bucket at an opposite free second end thereof;
(c) a guide track being provided to cause the free second end of the pivoting arm (12) to which the bucket (10) is attached to pivot outwardly with respect to said internal curves and the buckets (10) in turn to follow a diverging curved path (27A) of greater radius than the radius of said internal curve (28C) in the endless path of the entrainment means (15A,15B) being transited and thereby space the buckets (10) further apart prior to and while negotiating said internal curve (28C) in the endless path than when the buckets (10) are proceeding along a straight portion (19) of the endless path; characterized in the provision of:
(d) guidance means (50 or 52) engaging said entrainment means (15A, 15B) in advance of said internal curves (28C) in the endless path to cause the buckets (10) to move apart vertically (at A) prior to the free second end of the pivoting arm being caused to pivot outwardly with respect to said internal curves by said guide track.

2. A conveyor system according to claim 1 wherein said entrainment means comprises a chain (15A,15B), and wherein said pivoting arm (12) is attached to said chain (15A,15B) by means of two pins (16) which connect a link (15A) of the chain to an adjacent link (15B).

3. A conveyor system according to claim 2 wherein said guidance means (50,52) comprises a cam track or guide (50) with which said means engages.

4. A conveyor system according to claim 2 wherein said guidance means comprises a roller (52) around which said entrainment means (15A,15B) passes.

5. A conveyor system according to claim 2, 3 or 4 wherein a guide roller (17) is provided on each of said pins (16).

6. A conveyor system according to claim 5 wherein said rollers (17) engage said guidance means (50 or 52).

7. A conveyor system according to any one of claims 1-6 in which the adjacent buckets (10) are arranged to be in touching relation along the straight portions (19,20,21) of the path but to separate when the buckets (10) go around a curve (28A-28D).

8. A conveyor system according to any one of claims 1-7 in which the buckets (10) are maintained in a substantially horizontal attitude at all times except when contents of the buckets are being discharged.

9. A conveyor system according to any one of claims 1-8 in which discharge means (23) are provided to empty the buckets (10) comprising a cam (29') located alongisde the path of the entrainment means (15A,15B) and a corresponding cam follower (30) on each bucket (10) to cause the bucket (10) to tip and empty when the cam follower engages the cam (29').

10. A conveyor system according to any one of claims 1-9 wherein the pivoting arm (12) carrying each bucket (10) includes a roller (11) at said opposite end thereof, and wherein said roller (11) runs on a guide track (27) for supporting said bucket (10) on horizontal sections (19,20,21) of the conveyor.

11. A conveyor system according to claim 2 or any one of the preceding claims 3-10 when dependent on claim 2 in which additional rollers (18) are employed for chain guidance carried on said pins (16).

12. A method of conveying material comprising the steps of:
(a) providing a series of buckets supported by an entrainment means along a predetermined endless path having straight portions and at least two internal curves;
(b) supporting each bucket on the entrainment means by means of an individual pivoting arm, each said arm being pivotally attached to the entrainment means at a first end thereof in fixed orientation to said entrainment means; and
(c) pivotally supporting the bucket at the opposite second end of said pivoting arm;
(d) causing the second end of the pivoting arm to which the bucket is attached to pivot outwardly with respect to said internal curves and the buckets in turn to follow a diverging curved path of greater radius than the radius of the curve in the endless path being transited and thereby space the buckets further apart around the internal curve in the endless path than when the buckets are proceeding along a straight portion of the path; characterised by:
(e) engaging said entrainment means with guidance means in advance of an internal curve (28C) in the endless path to cause the buckets to move apart vertically prior to the second end of the pivoting arm being caused to pivot outwardly with respect to said internal curve.

## Patentansprüche

1. Förderersystem umfassend:
(a) eine Reihe von Bechern (10), die durch ein Mitnahmemittel (15A, 15B) getragen sind, das einen vorbestimmten endlosen Weg mit geraden Teilen (19, 20, 21) und wenigstens zwei Innenkurven (28C) definiert; und
(b) einen individuellen länglichen Schwenkarm (12), der jeden jeweiligen Becher (10) auf dem Mitnahmemittel (15A, 15B) trägt, wobei jeder Schwenkarm (12) am Mitnahmemittel (15A, 15B) an einem ersten Ende hiervon in fester Orientierung zu diesem Mitnahmemittel (15A, 15B) befestigt ist und verschwenkbar den Becher an einem gegenüberliegenden freien Ende hiervon trägt;
(c) eine Führungsbahn vorgesehen ist, um das freie Ende dieses Schwenkarms (12), an dem dieser Becher (10) befestigt ist, zu veranlassen, nach außen bezüglich dieser Innenkurve zu verschwenken und die Becher (10) nacheinander einer divergierenden gekrümmten Bahn (27A) größeren Radius als der Radius dieser Innenkurve (28C) in der endlosen Bahn des Mitnahmemittels (15A, 15B), die durchlaufen wird, folgen und hierdurch die Becher (10) weiter voneinander beabstanden, bevor sie und während sie diese Innenkurve (28C) in der endlosen Bahn abfahren, als wenn die Becher (10) längs eines geraden Teils (19) der endlosen Bahn vorlaufen, **gekennzeichnet** durch das Vorsehen von:
(d) Führungsmitteln (50 oder 52), die dieses Mitnahmemittel (15A, 15B) vor diesen Innenkurven (28C) in der endlosen Bahn erfassen, um die Becher (10) zu veranlassen, vertikal (bei A) sich voneinander fortzubewegen, bevor das freie zweite Ende des Schwenkarms veranlaßt wird, sich nach außen bezüglich dieser Innenkurven durch diese Führungsbahn zu verschwenken.

2. Förderersystem nach Anspruch 1, bei dem dieses Mitnahmemittel eine Kette (15A, 15B) umfaßt und wobei dieser Schwenkarm (12) an dieser Kette (15A, 15B) mittels zweier Stifte (16) befestigt ist, die einen Lenker (15A) der Kette mit einem benachbarten Lenker (15B) verbinden.

3. Förderersystem nach Anspruch 2, bei dem dieses Führungsmittel (50, 52) eine Nockenspur oder Führung (50) umfaßt, in der dieses Mittel eingreift.

4. Förderersystem nach Anspruch 2, bei dem dieses Führungsmittel eine Rolle (52) umfaßt, um die dieses Mitnahmemittel (15A, 15B) läuft.

5. Förderersystem nach Anspruch 2, 3 und 4, wobei eine Führungsrolle (17) auf jedem dieser Stifte (16) vorgesehen ist.

6. Förderersystem nach Anspruch 5, wobei diese Rollen (17) in dieses Führungsmittel (50 oder 52) eingreifen.

7. Förderersystem nach einem der Ansprüche 1-6, bei dem die benachbarten Becher (10) so angeordnet sind, daß sie sich längs der geraden Teile (19, 20, 21) der Bahn berühren, jedoch sich voneinander trennen, wenn die Eimer (10) um eine Kurve (28A-28D) laufen.

8. Förderersystem nach einem der Ansprüche 1-7, bei dem die Becher (10) in einer im wesentlichen horizontalen Lage immer gehalten sind, abgesehen davon, wenn Inhalte der Eimer ausgeleert werden.

9. Förderersystem nach einem der Ansprüche 1-8, bei dem die Entleerungsmittel (23) vorgesehen sind, um die Eimer (10) zu entleeren und eine Nocke (29') umfassen, die längs der Bahn dieser Mitnahmemittel (15A, 15B) angeordnet ist und ein entsprechender Nockenstössel (30) auf jedem Eimer (10) vorgesehen ist, um den Eimer (10) zu veranlassen, zu verkippen und sich zu entleeren, wenn der Nockenstössel die Nocke (29') erfaßt.

10. Förderersystem nach einem der Ansprüche 1-9, wobei der Schwenkarm (12), der jeden Eimer (10) trägt, eine Rolle (11) an diesem gegenüberliegenden Ende hiervon umfaßt und wobei diese Rolle (11) auf einer Führungsbahn (27) läuft, um diesen Becher (10) auf horizontalen Abschnitten (19, 20, 21) des Förderers zu tragen.

11. Förderersystem nach Anspruch 2 oder einem der vorhergehenden Ansprüche 3-10, wenn abhängig von Anspruch 2, bei dem zusätzliche Rollen (18) zur Kettenführung, getragen auf diesen Stiften (16) verwendet werden.

12. Verfahren zum Fördern von Material, umfassend die Schritte:
(a) Vorsehen einer Reihe von Bechern, die durch ein Mitnahmemittel längs einer bestimmten endlosen Bahn mit geraden Teilen und wenigstens zwei Innenkurven getragen sind;
(b) Lagern jedes Bechers auf diesem Mitnahmemittel vermittels eines individuellen Schwenkarms, wobei jeder dieser Arme schwenkbar an dem Mitnahmemittel an einem ersten Ende hiervon in fester Orientierung zu diesem Mitnahmemittel befestigt ist und
(c) Schwenklagern des Eimers an dem gegenüberliegenden zweiten Ende dieses Schwenkarms;
(d) Veranlassen des zweiten Endes des Schwenkarms, an dem der Becher befestigt ist, nach außen bezogen auf diese Innenkurven zu verschwenken und daß die Becher nacheinander einer divergierenden Kurvenbahn größeren Radius als dem Radius der Kurve in der endlos durchlaufenden Bahn folgen und hierdurch die Becher weiter beabstanden, um die Innenkurve in der endlosen Bahn auf Entfernung zu bringen, als wenn die Becher längs eines geraden Teils der Bahn vorlaufen, **dadurch gekennzeichnet**, daß
(e) dieses Mitnahmemittel mit dem Führungsmittel vor einer Innenkurve (28C) in der endlosen Bahn in Eingriff gebracht wird, um die Eimer zu veranlassen, vertikal sich voneinander fortzubewegen, bevor das zweite Ende des Schwenkarms veranlaßt wird, nach außen bezüglich dieser Innenkurve zu verschwenken.

## Revendications

1. Système de transport comprenant :
(a) une série de baquets (10) supportés par un moyen d'entraînement (15A, 15B) définissant une trajectoire sans fin prédéterminée, ayant des tronçons rectilignes (19, 20, 21) et au moins deux courbes intérieures (28C); et
(b) un bras pivotant (12) allongé individuel, supportant chaque baquet (10) respectif sur le moyen d'entraînement (15A, 15B), chacun desdits bras pivotants (12) étant fixé au moyen d'entraînement (15A, 15B), à une première extrémité, selon une orientation fixe par rapport audit moyen d'entraînement (15A, 15B), et supportant à pivotement le baquet à sa deuxième extrémité libre opposée;
(c) une piste de guidage étant prévue pour forcer la deuxième extrémité libre du bras pivotant (12), à laquelle est fixé le baquet (10), à pivoter vers l'extérieur par rapport auxdites courbes intérieures, et pour forcer les baquets (10) à suivre, en conséquence, une trajectoire incurvée divergente (27A), ayant un rayon supérieur au rayon de ladite courbe intérieure (28C), sur la trajectoire sans fin du moyen d'entraînement (15A, 15B) en train d'être parcourue, et écarter de ce fait les baquets (10) plus loin l'un de l'autre, avant et pendant qu'ils franchissent ladite courbe intérieure (28C) sur la trajectoire sans fin, par rapport au moment où les baquets (10) avancent le long d'un tronçon rectiligne (19) de la trajectoire sans fin; caractérisé par la présence :
(d) de moyens de guidage (50 ou 52) venant en prise avec ledit moyen d'entraînement (15A, 15B), avant le passage desdites courbes intérieures (28C) de la trajectoire sans fin, pour forcer les baquets (10) à s'écarter verticalement (en A), avant que la deuxième extrémité libre du bras pivotant soit forcée à pivoter vers l'extérieur par rapport auxdites courbes intérieures, par ladite piste de guidage.

2. Système de transport selon la revendication 1, dans lequel ledit moyen d'entraînement comprend une chaîne (15A, 15B), et dans lequel ledit bras pivotant (12) est fixé à ladite chaîne (15A, 15B) au moyen de deux axes (16) qui relient un maillon (15A) de la chaîne à un maillon (15B) adjacent.

3. Système de transport selon la revendication 2, dans lequel ledit moyen de guidage (50, 52) comprend une piste ou un guide de came (50), avec lequel ledit moyen vient en contact.

4. Système de transport selon la revendication 2, dans lequel ledit moyen de guidage comprend un galet (52) autour duquel passe ledit moyen d'entraînement (15A, 15B).

5. Système de transport selon la revendication 2, 3 ou 4, dans lequel un galet de guidage (17) est prévu sur chacun desdits axes (16).

6. Système de transport selon la revendication 5, dans lequel lesdits galets (17) viennent au contact dudit moyen de guidage (50 ou 52).

7. Système de transport selon l'une quelconque des revendications 1 à 6, dans lequel les baquets (10) adjacents sont positionnés pour se toucher le long des tronçons rectilignes (19, 20, 21) de la trajectoire, mais pour se séparer lorsque les baquets (10) passent autour d'une courbe (28A à 28D).

8. Système de transport selon l'une quelconque des revendications 1 à 7, dans lequel les baquets (10) sont maintenus en position sensiblement horizontale, à tout moment, excepté lorsque le contenu des baquets est en cours de déchargement.

9. Système de transport selon l'une quelconque des revendications 1 à 8, dans lequel il est prévu, pour vider les baquets (10), des moyens de déchargement comprenant une came (29') située le long de la trajectoire du moyen d'entraînement (15A, 15B) et un suiveur de came (30) correspondant, sur chaque baquet (10), pour forcer le baquet (10) à basculer et à se vider, lorsque le suiveur de came vient au contact de la came (29').

10. Système de transport selon l'une quelconque des revendications 1 à 9, dans lequel le bras pivotant (12) portant chaque baquet (10) comprend un galet (11) à sa dite extrémité opposée, et dans lequel ledit galet (11) se déplace sur une piste de guidage (27) pour supporter ledit baquet (10) sur des sections horizontales (19, 20, 21) du transporteur.

11. Système de transport selon la revendication 2 ou l'une quelconque des revendications 3 à 10 précédentes, lorsqu'elles sont dépendantes de la revendication 2, dans lequel des galets supplémentaires (18) sont utilisés pour un guide de chaîne porté sur lesdits axes (16).

12. Procédé de transport de matériaux comprenant les étapes qui consistent :
(a) à se munir d'une série de baquets supportés par un moyen d'entraînement, le long d'une trajectoire sans fin prédéterminée, ayant des tronçons rectilignes et au moins deux courbes intérieures;
(b) à monter chaque baquet sur le moyen d'entraînement à l'aide d'un bras pivotant individuel, chacun desdits bras étant fixé à pivotement au moyen d'entraînement, à une première extrémité, sous une orientation fixe par rapport audit moyen d'entraînement; et
(c) à monter à pivotement le baquet à la deuxième extrémité opposée dudit bras pivotant;
(d) à forcer la deuxième extrémité du bras pivotant, à laquelle est fixé le baquet, à pivoter vers l'extérieur par rapport auxdites courbes intérieures, et les baquets à suivre, en conséquence, une trajectoire incurvée divergente, ayant un rayon supérieur au rayon de la courbe de la trajectoire sans fin en train d'être parcourue et à espacer de ce fait les baquets plus loin l'un de l'autre autour de la courbe intérieure sur la trajectoire sans fin, par rapport au moment où les baquets avancent le long d'un tronçon rectiligne de la trajectoire, caractérisé par :
(e) la mise en prise dudit moyen d'entraînement avec un moyen de guidage, en amont d'une courbe intérieure (28C) sur la trajectoire sans fin, pour forcer les baquets à s'écarter verticalement avant que la deuxième extrémité du bras pivotant soit forcée à pivoter vers l'extérieur par rapport à ladite courbe intérieure.
